# EUROPÄISCHE PATENTSCHRIFT

(11) **EP 0 796 711 B1**
(45) Veröffentlichungstag und Bekanntmachung des Hinweises auf die Patenterteilung: **12.09.2001**
(21) Anmeldenummer: 96119828.0
(22) Anmeldetag: 11.12.1996
(51) Int. Cl.: B29C 41/42, B29C 41/04, B29C 33/00, B29C 41/46

(54) **Vorrichtung zum Herstellen von Kunststoff-Formfolien**
Apparatus for producing shaped plastic sheets
Dispositif pour le formage de feuilles en matière plastique

(30) Priorität: 22.03.1996 DE 19611298
(43) Veröffentlichungstag der Anmeldung: 24.09.1997
(73) Patentinhaber: Krauss-Maffei Kunststofftechnik GmbH, 80997 München (DE)
(72) Erfinder: Wagner, Peter, 85258 Weichs (DE); Imensek, Mirko, 81247 München (DE)
(74) Vertreter: Rucker, Bernd

(56) Entgegenhaltungen:
- EP-A- 0 408 202
- US-A- 2 959 820

## Beschreibung

Die Erfindung bezieht sich auf eine Vorrichtung zum Herstellen von Kunststoff-Formfolien gemäß dem Oberbegriff des Patentanspruchs 1.

Eine Vorrichtung zum Herstellen von Kunststoff-Formfolien ist aus DE 41 42 109 C2 bekannt. Das Formwerkzeug besteht dabei im wesentlichen aus einer Formwandung, deren Formoberfläche mit einer Narbung versehen ist, wie sie z.B. bei Armaturentafeln oder Innenverkleidungen von Türen für Kraftfahrzeuge üblich ist. Bei jedem Arbeitsgang wird das beheiz- und kühlbare Formwerkzeug mit einem Behälter verbunden, der ein Thermoplast-Kunststoffpulver enthält. Durch Rotation des beheizten Verbundes wird das Pulver über die gesamte Formwandung des Formwerkzeuges verteilt und durch die Beheizung schichtweise aufgeschmolzen, so daß sich eine der Formwandung entsprechende Formhaut herausbildet, die nach beendeter Rotation, Trennen des Verbundes und Abkühlen des Formwerkzeuges aus diesem herausgelöst und entnommen werden kann.

Auf diese Weise können Formfolien auch mit verhältnismäßig komplizierten Oberflächen, wie z.B. solche mit Hinterschneidungen ohne weiteres hergestellt und entnommen werden, da das schmelzende Pulver auch in Hinterschneidungen der Formwandung eindringt.

Bei der Herstellung von Formfolien für die Innenverkleidung von Kraftfahrzeugtüren wird üblicherweise eine Aussparung für den Türgriff vorgesehen. Dieser wird gesondert hergestellt und später in die Türfüllung eingesetzt. Ein derartiges Vorgehen ist zeit- und kostenaufwendig.

Aus der gattungsbildenden EP-A-0 408 202 ist eine Vorrichtung bekannt, mit der eine einstückige Kunststoff-Formfolie mit einer ringförmigen Anformung, nämlich eine Innenverkleidung für eine Kfz-Tür mit einem angeformten Türgriff, herstellbar ist. Diese bekannte Vorrichtung weist ein Formwerkzeug auf, das im Bereich der ringförmigen Anformung eine Vertiefung besitzt. In diesem Bereich ist ein in etwa U-förmiges erstes Einsatzteil in die Vertiefung des Formwerkzeugs eingesetzt, in das ein zweites keilförmiges Einsatzteil eingesetzt wird, das so gestaltet ist, daß es mit den Seitenwänden des U-förmigen Einsatzteils abdichtet. Das zweite keilförmige Einsatzteil endet in einem Abstand über dem Boden des ersten Einsatzteils. Im Querschnitt bildet das erste U-förmige Einsatzteil zusammen mit dem zweiten keilförmigen Einsatzteil einen rohrartigen Kanal. Nach oben sind aus dem keilförmigen Einsatzteil Versorgungsleitungen für eine elektrische Widerstandsheizung und eine Kühlflüssigkeit herausgeführt. Mittels nach oben sich erstreckender Verbindungsstangen ist das keilförmige Einsatzteil an einem Schwenkarm befestigt, mit dem es in das U-förmige Einsatzteil eingesetzt werden kann (opening 60 in Fig.5), um die Kunststoff-Formfolie in dem Formwerkzeug zu erzeugen (molding position in Fig.6) und mit dem es aus der Form heraus geschwenkt werden kann (demolding position in Fig.5), damit das fertige Formteil aus dem Formwerkzeug entnommen werden kann, wobei das Griffteil (integral tube skin 20) durch die Öffnung 60 entnommen wird (siehe Fig.5, insert opening 60 und Spalte 6, Zeilen 11 bis 15). Das keilförmige Einsatzteil bleibt in allen Betriebsphasen stets mit dem Schwenkarm verbunden und an die Versorgungsleitungen angeschlossen. Wegen des Schwenkmechanismus und der dadurch erforderlichen nach oben ragenden Verbindungsstangen sowie der nach oben von dem keilförmigen Einsatzteil weggeführten Versorgungsleitungen weist das fertige Kunststoff-Formteil im Bereich des keilförmigen Einsatzteils, also hinter dem Griffteil (integral tube skin 20) systembedingt stets ein Loch auf, d.h. in dem Bereich hinter dem Griffteil verfügt das Kunststoff-Formteil nicht über eine allseits geschlossene Formteil-Oberfläche.

Demgegenüber liegt der Erfindung die Aufgabe zugrunde, eine Vorrichtung anzugeben, mit der ein einstückiges Kunststoff-Formteil herstellbar ist, das über eine ringförmige Anformung verfügt, und bei dem die Formteil-Oberfläche auch im Bereich hinter der ringförmigen Anformung vollständig geschlossen ist.

Diese Aufgabe wird gemäß den Merkmalen des Patentanspruchs 1 gelöst. Dabei wird die Erkenntnis ausgenutzt, daß aufgrund der Elastizität der fertigen Kunststoff-Formfolie trotz der allseits geschlossenen Formhautbereiche im Bereich der ringförmigen Anformung die Kunststoff-Formfolie aus dem Formwerkzeug entnommen werden kann, wenn diese nach der Fertigstellung zunächst so weit über das Einsatzteil weggestülpt wird, daß das Einsatzteil freigelegt ist und aus dem Formwerkzeug entfernt werden kann, so daß anschließend die Kunststoff-Formfolie vollständig und mit der ringförmigen Anformung wie beispielsweise einem angeformtem Griff aus dem Formwerkzeug entnommen werden kann.

Das Einsatzteil ist mit Paßflächen zum Einpassen in die Form versehen, während der hautoberflächenbildende Teil des Einsatzteiles vorzugsweise mit der gleichen Oberflächenstruktur wie die Formwandung, z.B. mit einer Ledernarbung, versehen ist.

Um dem Einsatzteil einen paßgerechten Halt in der Form zu geben, sind vorteilhaft eine Zentrierung sowie ein Bajonettverschluß oder eine federbelastete Kugelarretierung an einer Paßfläche vorgesehen.

Das Einsatzteil kann separat in einem Ofen vorgeheizt und damit der Heiztemperatur der Form angepaßt werden. In vorteilhafter Ausbildung der Erfindung ist das Einsatzteil an ein Heiz- und Kühlsystem des Formwerkzeuges anschließbar. Auf diese Weise kann der Herstellungszyklus noch verkürzt werden.

In der Zeichnung ist ein Ausführungsbeispiel der Erfindung dargestellt. Es zeigen:

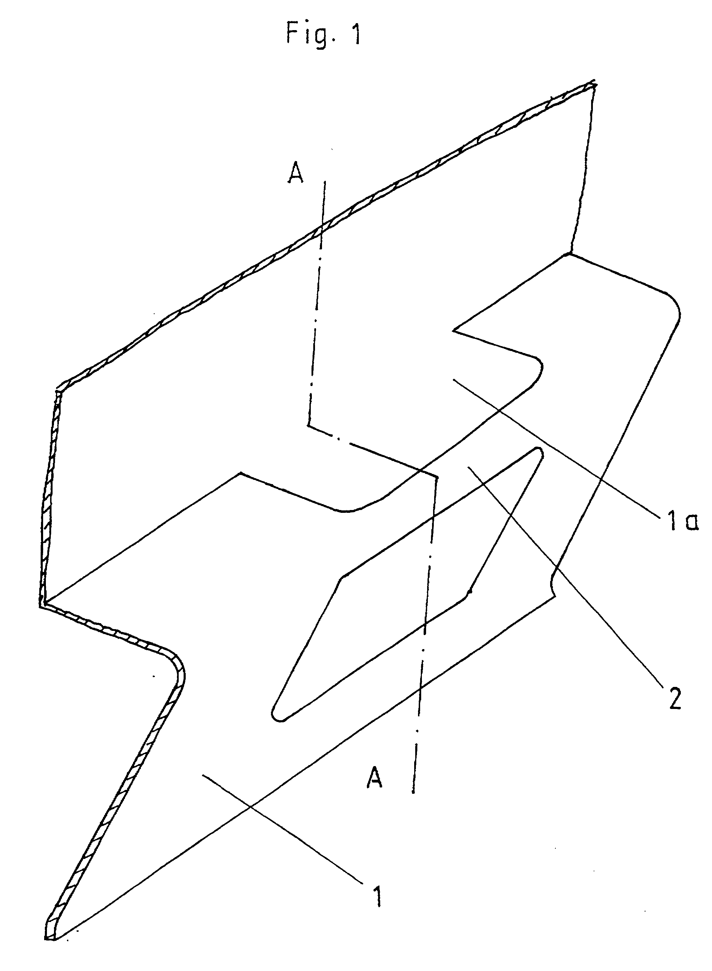

- Fig. 1: den Ausschnitt einer Formhaut einer Türinnenverkleidung,

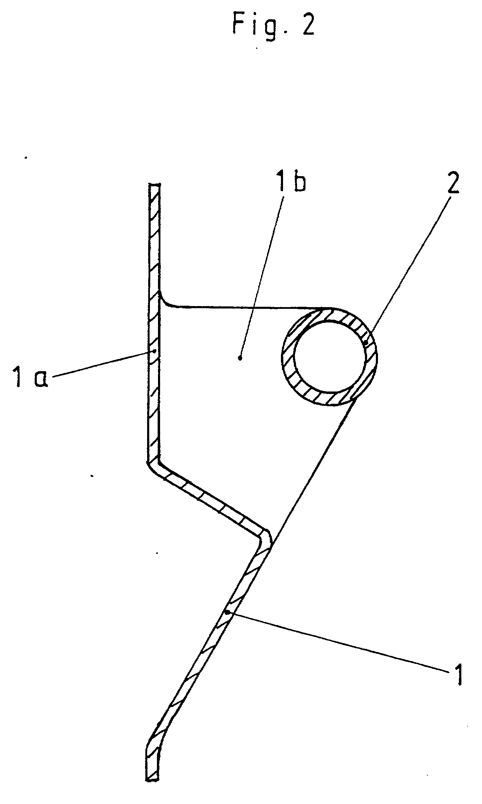

- Fig. 2: einen Schnitt A-A gemäß Fig. 1,
- Fig. 3: einen Fig. 2 entsprechenden Schnitt der Formwandung mit einem Einsatzteil,
- Fig. 4: das Einsatzteil gemäß Fig. 3 mit einem Rohranschluß.

Eine Formhaut 1 ist mit einem angeformten, allseits geschlossenen Griff 2 sowie mit einem dahinterliegenden, allseits geschlossenen, Formhautbereich 1a versehen. Der Schnitt A-A zeigt ebenfalls die Formhaut 1 mit dem Griff 2 sowie außerdem den seitlichen Formhautbereich 1b. Die Formhautbereiche 1a und 1b gehen so ineinander über, daß die Formhaut 1 auch im Griffbereich allseits geschlossen ist.

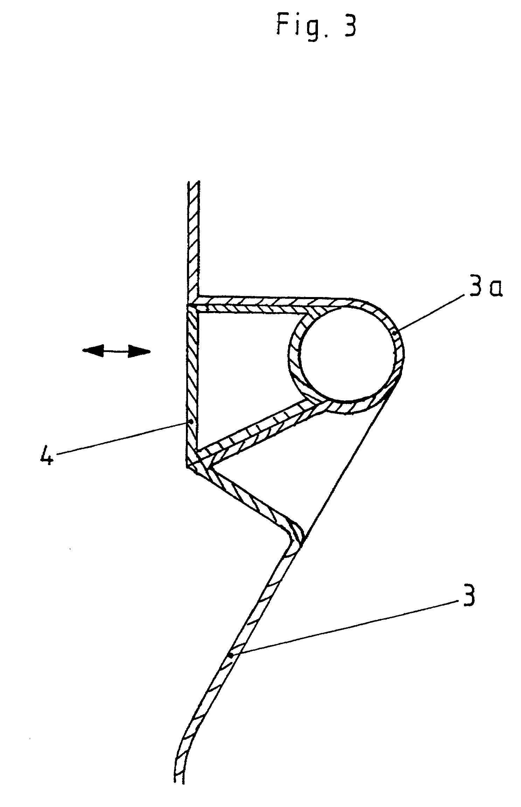

Gemäß Fig. 3 ist in eine Formwandung 3 ein Einsatzteil 4 eingesetzt, welches den Griffbereich 3a der Formwandung komplettiert. Um die Formhaut nach Fertigstellung von der Formwandung 3 ablösen zu können, wird das Einsatzteil 4 nach dem Wegstülpen der Formhaut 1 aus der Formwandung 3 herausgenommen (siehe Doppelpfeil).

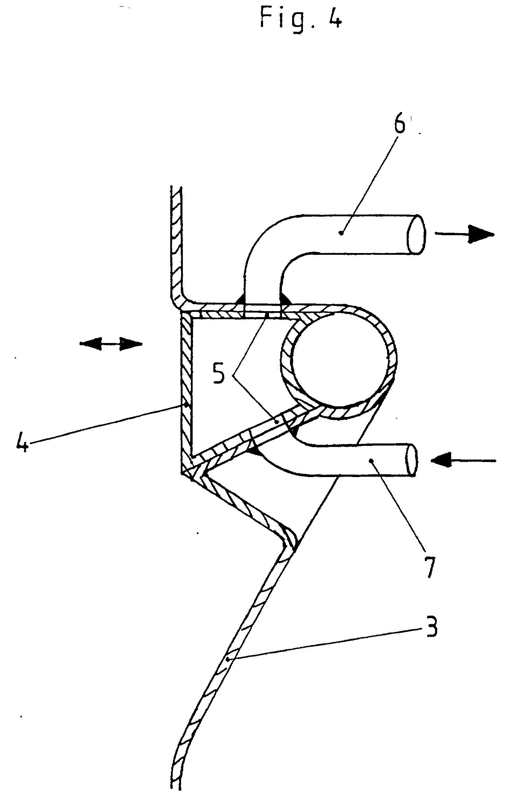

Nach Fig. 4 ist das Einsatzteil 4 mit Bohrungen 5 und die Formwandung 3 mit Rohren 6 und 7 für eine Beheizung bzw. Kühlung des Einsatzteils 4 versehen.

## Patentansprüche

1. Vorrichtung zum Herstellen einer einstückigen Kunststoff-Formfolie (1) mit einer ringförmigen Anformung (2), wie insbesondere einer Innenverkleidung für eine Kfz-Tür mit einem angeformten Türgriff oder eines Armaturenbretts mit einem eingeformten Griff oder einer Haltestange, mittels eines drehbaren Formwerkzeugs mit einem Heiz- und Kühlsystem, wobei ein Thermoplast-Kunststoffpulver auf der aufgeheizten Formoberfläche schichtmäßig aufschmilzt und nach dem Abkühlen der Formwandung als Kunststoff-Formfolie entnehmbar ist, wobei in die Formwandung (3) ein lösbares Einsatzteil (4) integriert ist, derart, daß nach Herausnehmen des Einsatzteils (4) die Formfolie (1) aus der Formwandung (3) herausnehmbar ist,
**dadurch gekennzeichnet,**
**daß** das Einsatzteil (4) den Bereich (3a) der ringförmigen Anformung (2) in der Formwandung (3) derart komplettiert, daß hinter der ringförmigen Anformung (2) ein allseits geschlossener Formhautbereich (1, 1a, 1b) gebildet wird.

2. Vorrichtung nach Anspruch 1, **dadurch gekennzeichnet**, daß das Einsatzteil (4) an das Heiz- und Kühlsystem des Formwerkzeuges anschließbar ist.

3. Vorrichtung nach den Ansprüchen 1 und 2, **dadurch gekennzeichnet, daß** das Einsatzteil (4) mit einer Zentrierung und einem Bajonettverschluß oder einer federbelasteten Kugelarretierung an einer Paßfläche versehen ist.

## Claims

1. Device for producing a one-piece shaped plastic sheet (1) with an annular moulding (2), such as, in particular an interior trim for a motor vehicle door with a moulded-on door handle or an instrument panel with a moulded-in handle or a stay-bar, by means of a rotatable mould with a heating and cooling system, wherein a thermoplastic powder is melted on the heated mould surface in layers and can be removed as a shaped plastic sheet after cooling of the mould wall, wherein a detachable insert (4) is integrated into the mould wall (3), in such a way that after removal of the insert (4) the shaped sheet (1) can be removed from the mould wall (3), **characterised in that** the insert (4) completes the region (3a) of the annular moulding (2) in the mould wall (3) in such a way that a mould skin region (1, 1a, 1b) sealed on all sides is formed behind the annular moulding (2).

2. Device according to claim 1, **characterised in that** the insert (4) can be -attached to the heating and cooling system of the mould.

3. Device according to claims 1 and 2, **characterised in that** the insert (4) is provided with a centring means and bayonet closure or a spring-loaded ball stop on a locating surface.

## Revendications

1. Dispositif pour le formage d'une feuille en matière plastique monobloc (1) possédant une partie formée (2) en forme d'anneau, comme un revêtement intérieur notamment, pour un véhicule doté d'une poignée de porte formée ou d'un tableau de bord avec une poignée ou un rail de retenue moulé(e), au moyen d'un outil de formage rotatif avec un système de chauffage et de refroidissement, moyennant quoi une poudre en matière plastique thermoplastique fond en couches sur la surface de formage chauffée et peut être extraite suite au refroidissement de la paroi de formage pour donner une feuille en matière plastique, moyennant quoi une pièce de rechange détachable (4) est intégrée dans la paroi de formage (3) de telle sorte que la feuille (1) puisse être retirée de la paroi de formage (3) suite au retrait de la pièce de rechange (4), **caractérisé en ce que** la pièce de rechange (4) complète la zone (3a) de la formation (2) en forme d'anneau dans la paroi de formage (3) de telle sorte qu'une zone de peau de moulage (1, 1a, 1b) fermée de tous les côtés se forme derrière la formation (2) en forme d'anneau.

2. Dispositif selon la revendication 1, **caractérisé en ce que** la pièce de rechange (4) peut être raccordée au système de chauffage et de refroidissement de l'outil de formage.

3. Dispositif selon les revendications 1 et 2, **caractérisé en ce que** la pièce de rechange (4) est dotée d'un centrage et d'un joint à baïonnette ou d'un verrouillage par billes d'arrêt commandé par ressort au niveau d'une surface de contact.
